# EUROPÄISCHE PATENTSCHRIFT

(11) **EP 2 792 150 B1**
(45) Veröffentlichungstag und Bekanntmachung des Hinweises auf die Patenterteilung: **04.11.2015**
(21) Anmeldenummer: 12812843.6
(22) Anmeldetag: 11.12.2012
(51) Int. Cl.: H04N 13/04, G02B 5/22, G02B 27/22

(54) **BETRACHTUNGSVORRICHTUNG, STEREO-PROJEKTIONSSYSTEM UND VERWENDUNG VON CYANIN-FARBSTOFFEN IN SUPRAMOLEKULARER J-AGGREGAT-KONFIGURATION**
VIEWING DEVICE, STEREO PROJECTION SYSTEM AND USE OF CYANINE DYES IN A SUPRAMOLECULAR J-AGGREGATE CONFIGURATION
DISPOSITIF D'OBSERVATION, SYSTÈME DE PROJECTION EN STÉRÉO, ET UTILISATION DE COLORANTS DE CYANINE AYANT UNE CONFIGURATION SUPRAMOLÉCULAIRE EN AGRÉGAT DE TYPE J.

(30) Priorität: 13.12.2011 DE 102011120834
(43) Veröffentlichungstag der Anmeldung: 22.10.2014
(73) Patentinhaber: Infitec GmbH, 89091 Ulm (DE)
(72) Erfinder: BAUM, Maximilian, 82237 Wörthsee (DE)
(74) Vertreter: Straub, Bernd
(86) Internationale Anmeldenummer: PCT/EP2012/005109
(87) Internationale Veröffentlichungsnummer: WO 2013/087191

(56) Entgegenhaltungen:
- JP-A- 2002 122 730
- US-A1- 2007 127 121
- US-A1- 2010 103 355
- US-A1- 2010 208 041
- US-A1- 2010 214 397

## Beschreibung

### Gebiet der Erfindung

Die Erfindung bezieht sich auf eine Betrachtungsvorrichtung für ein Stereoprojektionssystem, umfassend ein erstes und ein zweites jeweils mit einem optisch filternden Filterschichtsystem versehenes Betrachtungsfenster, wobei jedes Betrachtungsfenster im sichtbaren Spektralbereich ein Filterspektrum mit mehreren durch Blockierungsbereiche voneinander getrennten Durchlassbereichen aufweist und wobei jeder Durchlassbereich des Filterspektrums des ersten Betrachtungsfensters von einem zugeordneten Blockierungsbereich des Filterspektrums des zweiten Betrachtungsfensters überdeckt ist.

Die Erfindung bezieht sich weiter auf ein Stereo-Projektionssystem, umfassend
- eine Projektionsanlage, die ein erstes und ein zweites Bild, welche ein Objekt unter unterschiedlichen Sichtwinkeln darstellen, im sichtbaren Spektralbereich mit orthogonalen Projektionsspektren auf einer Projektionswand aufeinander projiziert, und
- eine Betrachtungsvorrichtung, die ein erstes und ein zweites, jeweils mit einem optisch filternden Filterschichtsystem versehene Betrachtungsfenster aufweist, deren im sichtbaren Spektralbereich orthogonale Filterspektren so auf die Projektionsspektren der Projektionsanlage abgestimmt sind, dass das erste Betrachtungsfenster für das erste Projektionsspektrum und das zweite Betrachtungsfenster für das zweite Projektionsspektrum transparent ist,
wobei jedes Betrachtungsfenster im sichtbaren Spektralbereich ein Filterspektrum mit mehreren durch Blockierungsbereiche voneinander getrennten Durchlassbereichen aufweist und wobei jeder Durchlassbereich des Filterspektrums des ersten Betrachtungsfensters von einem zugeordneten Blockierungsbereich des Filterspektrums des zweiten Betrachtungsfenstersüberdeckt ist.

Die Erfindung bezieht sich schließlich auf eine neuartige Verwendung von Cyanin-Farbstoffen in supramolekularer J-Aggregat-Konfiguration.

### Stand der Technik

Aus der DE 198 08 264 C2 ist der Prototyp der sogenannten Wellenlangen-Multiplex-Stereoprojektion bekannt.

Zur dreidimensionalen optischen Rekonstruktion von Objekten sind unterschiedliche Ansätze bekannt. Weite Verbreitung hat insbesondere die Stereoprojektion gefunden. Dabei werden von einem Objekt zwei Teilbilder erzeugt, die das Objekt unter unterschiedlichen Blickwinkeln darstellen. Der Blickwinkel Unterschied entspricht der Augen-Parallaxe eines menschlichen Betrachters. Zur Erzeugung eines räumlichen Eindrucks des Objektes müssen in einem Stereoprojektionssystem eine Projektionsanlage und eine Betrachtungsvorrichtung derart zusammenwirken, dass ein Betrachter, der die projizierten Bilder durch die Betrachtungsfenster der Betrachtungsvorrichtung hindurch betrachtet, das dem rechten Auge zugeordnete Teilbild nur mit dem rechten Auge und das dem linken Auge zugeordnete Teilbild nur mit dem linken Auge sieht. Es sind unterschiedliche Ansätze bekannt, dieses Zusammenwirken zu erreichen. Insbesondere werden Ansätze zur zeitlichen, spektralen und/oder polarisationstechnischen Trennung der Teilbilder verfolgt. Im Rahmen der spektralen Trennung der Teilbilder hat sich das Wellenlängen-Multiplexing als besonders vorteilhaft erwiesen, da mit diesem Verfahren eine sehr gute Farbdarstellung des Objekts möglich ist.

Beim Wellenlängen-Multiplexing werden die beiden Teilbilder mit zueinander orthogonalen Projektionsspektren auf einen Projektionsschirm, beispielsweise eine Kinoleinwand projiziert. Unter orthogonalen Projektionsspektren werden im Rahmen der vorliegenden Beschreibung allgemein solche Projektionsspektren verstanden, deren Spektralbänder einander im sichtbaren Bereich nicht überlappen. Beim Wellenlängen-Multiplexing umfasst jedes Projektionsspektrum mehrere voneinander beabstandete Spektralbänder. Diese sind vorzugsweise an der Lage der spektralen Empfindlichkeiten der drei Farbrezeptortypen des menschlichen Auges orientiert. Dabei sind die Bänder des Projektionsspektrums für das rechte Teilbild gegen die Bänder des Projektionsspektrums für das linken Teilbild versetzt, sodass die oben erläuterte Bedingung der Orthogonalität der Projektionsspektren erfüllt ist. Die so erzeugten Teilbilder werden auf dem Projektionsschirm deckend aufeinander projiziert. Zusätzlich können zeitliche Versätze und/oder Polarisationsunterschiede vorgesehen sein; dies führt jedoch zu einem Helligkeitsverlust und ist daher in der Regel unerwünscht. In der genannten Druckschrift werden die unterschiedlichen Projektionsspektren durch Einsatz von jeweils drei Lasern realisiert, deren Wellenlängen im roten, grünen bzw. blauen Spektralbereich liegen und paarweise leicht zueinander versetzt sind. Es ist jedoch auch möglich und bekannt, die Projektionsspektren mittels scharfer Interferenz-Kantenfilter aus einer Weißlichtquelle zu generieren.

Um die separate Rezeption der einzelnen Teilbilder mit dem rechten und dem linken Auge des Betrachters zu gewährleisten, ist eine Betrachtungsvorrichtung mit einem Betrachtungsfenster für das rechte und einem weiteren Betrachtungsfenster für das linke Auge vorgesehen. Die Betrachtungsfenster weisen unterschiedliche Filterspektren auf, die zueinander orthogonal und auf die Projektionsspektren abgestimmt sind. Insbesondere weist das Filterspektrum des dem linken Auge zugeordneten Betrachtungsfensters Durchlassbereich gerade dort auf, wo die Bänder des Projektionsspektrums des linken Teilbildes liegen. Umgekehrt weist es gerade dort Blockierungsbereiche auf, wo die Bänder des Projektionsspektrums des rechten Teilbildes liegen. Das Filterspektrum des dem rechten Auge zugeordneten Betrachtungsfensters ist analog gestaltet. Zueinander sind die Filterspektren der beiden Betrachtungsfenster orthogonal, wobei im Rahmen der vorliegenden Beschreibung unter orthogonalen Filterspektren solche verstanden werden, deren Durchlassbereich einander nicht überlappen. In der Praxis wird es selten möglich sein, die Filtereigenschaften der Betrachtungsfenster so zu gestalten, dass im Blockierungsbereich tatsächlich Transmission Null vorliegt. Der Begriff nicht-überlappend muss daher funktionsorientiert im Hinblick auf das zu erreichende Ziel der getrennten Wahrnehmung der Teilbilder ausgelegt werden.

Aufgrund der hohen Kontrastempfindlichkeit des menschlichen Auges ist die Trennschärfe der Filterspektren der Betrachtungsvorrichtung für die Qualität eines Stereoprojektionssystems von großer Bedeutung. Die genannte Druckschrift schlägt zur Schaffung geeigneter Betrachtungsfenster vor, steife, transparente Träger mit einem Interferenz-Filterschichtsystem zu beschichten. Derartige Filter lassen sich präzise designen und zeigen sehr scharfe Durchlass- und Blockierungsbereiche. Ihre Herstellung ist allerdings sehr aufwendig und teuer. Zudem wird zwingend ein steifer Träger vorausgesetzt, was im Hinblick auf Gewicht und Formanpassung nachteilig ist. Diese Nachteile wiegen besonders schwer bei der üblichen, brillenförmigen Ausgestaltung von Betrachtungsvorrichtungen für Kino-Stereoprojektionssysteme, bei denen die Stereo-Brillen so groß gefertigt sein müssen, dass sie auch über herkömmliche Korrekturbrillen gezogen werden können. Außerdem ist das Filterspektrum von Interferenzfiltern stark abhängig vom Einfallswinkel des Lichtes und somit von der Position des Betrachters bzw. vom Reflexionsort auf dem Schirm, was beides insbesondere in großen Kinosälen mit breiter Leinwand nachteilig ist.

Ein weiterer Nachteil im Rahmen der Kino-Stereoprojektion ist die Dauerhaftigkeit der bekannten Interferenz-Filterbrillen. Um die hohen Anschaffungskosten von Stereoprojektionssystemen zu amortisieren, sind Kinobetreiber gezwungen, für Stereo-Vorführungen höhere Preise zu verlangen als für herkömmliche Vorführungen. Psychologisch ist dies besonders einfach für den Kauf oder die Miete der Stereo-Brillen durchzusetzen. Aufgrund der hohen Kosten herkömmlicher Interferenz-Brillen ist dies nur im Rahmen der Miete praktikabel. Dies zieht jedoch weitere Schwierigkeiten im Hinblick auf Diebstahlschutz und Hygiene nach sich. Besonders wünschenswert wären günstig herstellbare, nicht wiederverwendbare Einwegbrillen, die es dem Kinobetreiber erlauben würden, jedem Besucher für jede Vorstellung eine neue Brille zu verkaufen ohne sich nach jeder Vorstellung um das Einsammeln und Reinigen benutzter Brillen kümmern zu müssen.

Einen völlig andren Bereich optischer Filtertechnik repräsentiert die US 2010/0103355 A1, die ein LCD-Display offenbart, welches zur Verbesserung der spektralen Trennschärfe zwischen den R- und G- bzw. den G- und B-Kanälen eine zusätzliche Farbkorrekturscheibe vorschlägt, die eine zwischen zwei Schutzscheiben eingebettete Filterschicht mit einem J-Aggregat eines Cyanin-Farbstoffs aufweist.

US 2007/127121 A1 offenbart eine Betrachtungsvorrichtung für ein Stereoprojektionssystem gemäss dem Oberbegriff des Anspruchs 1.

### Aufgabenstellung

Es ist daher die Aufgabe der vorliegenden Erfindung, kostengünstige Betrachtungsvorrichtungen für Stereoprojektionssysteme zur Verfügung zu stellen, die nur eine zeitlich eng begrenzte Verwendbarkeit haben.

Eine weitere Aufgabe der Erfindung ist die Bereitstellung von Stereoprojektionssystemen, die derartige Betrachtungsvorrichtungen verwenden.

Wie nachfolgend beschrieben, stellt die Lösung dieser Aufgaben zusätzlich ein neues Anwendungsgebiet für Cyaninfarbstoffe in supramolekularer J-Aggregat-Konfiguration dar.

### Darlegung der Erfindung

Diese Aufgaben werden in Verbindung mit den Merkmalen des Oberbegriffs von Anspruch 1 bzw. Anspruch 9 dadurch gelöst, dass jedes Filterschichtsystem als Absorptionsfilterschichtsystem mit einer Mehrzahl in unterschiedlichen Spektralbereichen absorbierender Substanzen ausgebildet ist, wobei wenigstens eine der absorbierenden Substanzen ein Cyanin-Farbstoff ist, der in supramolekularer Konfiguration eines J-Aggregats vorliegt.

Die genannte neuartige Verwendung von Cyanin-Farbstoffen in supramolekularer J-Aggregat-Konfiguration ist diejenige als absorbierende Substanzen in optisch filternden Filterschichtsystemen von Betrachtungsfenstern erfindungsgemäßer Betrachtungsvorrichtungen, insbesondere in erfindungsgemäßen Stereoprojektionssystemen.

Bevorzugte Ausführungsformen sind Gegenstand der abhängigen Patentansprüche.

Zunächst sieht die Erfindung eine Abkehr von dem Dogma vor, hinreichend scharfe Filterschichtsysteme könnten nur durch Interferenz-Filter erzeugt werden. Im Gegensatz dazu wird vorgeschlagen, Filterschichtsysteme aus Absorptionsfiltern zu verwenden. Dem Fachmann sind eine Vielzahl von Absorptionsfarbstoffen bekannt, die als absorbierende Substanzen in einem solchen Absorptionsfilterschichtsystem wirken können. Die geeignete Auswahl der Farbstoffe ist in Ansehung des jeweiligen Anwendungsfalles zu treffen. Insbesondere müssen die Filtereigenschaften, wie oben erläutert, sehr gut auf die jeweilige Projektionsanlage abgestimmt sein. Der auf dem Gebiet der Farbstoffchemie bewanderte Fachmann wird in der Praxis keine Schwierigkeiten haben, eine derartige Abstimmung vorzunehmen.

Weiter erfindungsgemäß ist vorgesehen, als wenigstens eine der absorbierenden Substanzen einen Cyanin-Farbstoff zu verwenden. Auch Cyanin-Farbstoffe sind dem Fachmann grundsätzlich bekannt. Erfindungsgemäß wird jedoch vorgeschlagen, diesen in supramolekularer Konfiguration als J-Aggregat zu verwenden. J-Aggregate, die teilweise auch als Scheibe-Aggregate bezeichnet werden, sind dem Fachmann ebenso wie ihre Herstellung grundsätzlich bekannt. Eine wichtige Eigenschaft von J-Aggregaten ist die spektrale Aufsteilung Ihrer Absorptionsspektren im Vergleich zum herkömmlichen molekularen Farbstoff. Die Verwendung von Cyanin-Farbstoffen in der J-Aggregat-Konfiguration ist daher besonders gut geeignet, scharfe Durchlass- bzw. Blockierungsbereiche im Filterspektrum der Betrachtungsfenster zu schaffen. Überraschend hat sich jedoch herausgestellt, dass hochkonzentrierte J-Aggregate von Cyanin-Farbstoffen, wie sie zur Ausbildung einer hinreichenden Extinktion für die Verwendung als Stereoprojektions-Filter erforderlich sind, deutlich lichtempfindlich sind. So wird die J-Aggregat-Konfiguration durch die Absorption von Licht nach und nach zerstört, sodass das ursprünglich scharfe Filterspektrum allmählich zerfließt, sodass die ursprüngliche Orthogonalität zwischen den Filterspektren der beiden Betrachtungsfenster der Betrachtungsvorrichtung zerstört wird. Folglich können die beiden projizierten Halbbilder nicht mehr scharf getrennt dem rechten bzw. dem linken Auge zugeführt werden, sodass der Stereoeffekt abnimmt. Folglich sind derart aufgebaute Stereo-Brillen nicht wiederverwendbar.

Besonders stark wirken sich die Vorteile der Erfindung aus, wenn jeder Blockierungsbereich des Filterspektrums jedes Betrachtungsfensters als absorbierende Substanz einen Cyanin-Farbstoff in supramolekularer J-Aggregat-Konfiguration aufweist. Da der Stereoeffekt jedoch bereits deutlich nachlässt, wenn in einem der Durchlassbereiche ein deutliches Übersprechen zwischen beiden Augen des Betrachters auftritt, genügt es grundsätzlich, wenn nur eine der im Filtersystem vorhandenen absorbierenden Substanzen ein Cyanin-Farbstoff in supramolekularer J-Aggregat-Konfiguration ist. Dies lässt Raum für den Einsatz eines weiten Spektrums weiterer Farbstoffe als zusätzliche absorbierende Substanzen. Als besonders gut einsetzbar haben sich Rhodamine und Squaraine erwiesen.

Bevorzugt besteht jedes Filterschichtsystem aus einer Mehrzahl von Einzelfilterschichten, wobei jede Einzelfilterschicht eine oder mehrere absorbierende Substanzen enthält, die gemeinsam genau einen der Blockierungsbereiche des Filterspektrums erzeugen. Auf diese Weise kann jeder Blockierungsbereich einzeln und unabhängig von den anderen Blockierungsbereichen des Filterspektrums gestaltet werden. Zudem erlaubt es der schichtweise Aufbau, vollkommen homogene Schichten mit wohldefinierten Filtereigenschaften übereinander zu legen. Es hat sich nämlich herausgestellt, dass die Homogenität über die gesamte Fläche des Betrachtungsfensters wesentlich zur Qualität des Stereoeindrucks beiträgt.

Bei einem bevorzugten Herstellungsverfahren wird jedes Filterschichtsystem auf einen im sichtbaren Spektralbereich transparenten Träger aufgerakelt. Insbesondere wird zunächst eine hochkonzentrierte Lösung eines Farbstoffs oder Farbstoffgemischs hergestellt und auf den Träger aufgerakelt. Die Wahl des Lösungsmittels und eventueller Zusätze, wie beispielsweise Tenside und/oder Salze sind auf den jeweiligen Farbstoff und ggf. die gewünschte Erzeugung von J-Aggregaten abgestimmt. Anschließend lässt man das Lösungsmittel ggf. unter Wärmezufuhr abtrocknen. Dieser Vorgang wiederholt sich schichtweise mit weiteren Farbstofflösungen.

Alternativ kann auch ein Kaskadengussverfahren eingesetzt werden. Als flexibler Träger wird bevorzugt eine im sichtbaren Bereich transparente, flexible Folie verwendet. Die Vorteile der Folienform im Hinblick auf Gewicht, Transporteigenschaften und Formgebung innerhalb der Betrachtungsvorrichtung sind offensichtlich. Anders als bei Interferenz-Filtern ist daher auch eine flexible Gestaltung des Filtersystems bei den erfindungsgemäßen AbsorptionsFiltern möglich.

Um einen qualitativ hochwertigen Stereo-Eindruck zu erzeugen ist, wie oben erwähnt, eine hohe Trennschärfe zwischen den Augen des Betrachters erforderlich. Jedoch ist auch die Kontrastempfindlichkeit des menschlichen Auges beschränkt, sodass ein gewisser, geringer Überlapp der Spektren noch tolerierbar ist und im Rahmen der vorliegenden Beschreibung noch unter die Bezeichnung "orthogonal" fällt. Insbesondere hat es sich als günstig herausgestellt, wenn der Transmissionsgrad jedes Betrachtungsfensters in jedem Blockierungsbereich seines Filterspektrums geringer als 1% des Transmissionsgrades des zugeordneten Durchlassbereichs des Filterspektrums des jeweils anderen Betrachtungsfensters beträgt.

Allerdings sollte auch die Trennschärfe zwischen Durchlass- und Blockierungsbereich innerhalb eines Filtersystems recht scharf sein. Es ist daher günstigerweise vorgesehen, dass der Transmissionsgrad jedes Betrachtungsfensters in jedem Blockierungsbereich seines Filterspektrums weniger als 1% des Transmissionsgrades jedes unmittelbar benachbarten Durchlassbereichs des Filterspektrums desselben Betrachtungsfensters beträgt.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung eines Stereo-Projektionssystems,
- Figur 2:: eine beispielhafte Ausgestaltung der Projektions- und Filterspektren des Systems von Figur 1,
- Figur 3:: das isolierte Filterspektrum für das linke Betrachtungsfenster der Betrachtungsvorrichtung des Systems von Figur 1,
- Figur 4:: das isolierte Filterspektrum für das rechte Betrachtungsfenster der Betrachtungsvorrichtung des Systems von Figur 1.

### Ausführliche Beschreibung bevorzugter Ausführungsformen

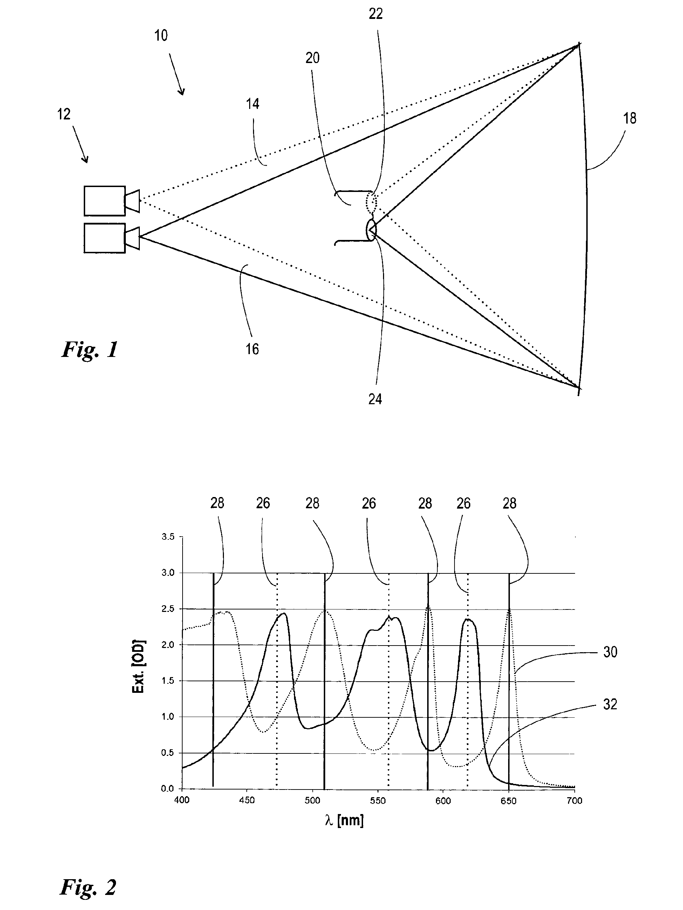

Figur 1 zeigt eine schematische Darstellung eines Stereo-Projektionssystems 10. Das System weist eine Stereo-Projektionsanlage 12 auf, die in Figur 1 als zwei getrennte Projektoren dargestellt ist. Üblicherweise werden spezielle Stereoprojektoren benutzt, für die eine Vielzahl an Varianten bekannt ist. Allen diesen Varianten gemeinsam ist das Ergebnis, dass zwei Bilder 14, 16, die ein Objekt unter unterschiedlichen Blickwinkeln darstellen, deckend übereinander auf einen Projektionsschirm 18 projiziert werden. Die Darstellungswinkel 14, 16 entsprechen typischerweise den Winkeln, mit denen ein Objekt von dem linken bzw. dem rechten Auge eines Betrachters abgebildet wird. Solche Bilder können durch Aufnahme eines Objektes unter unterschiedlichen Aufnahmewinkeln entstehen. Alternativ können Sie auch von einer digitalen Datenverarbeitungsanlage berechnet und mittels einer geeigneten Projektionsanlage 12 erzeugt werden. Entsprechend kann es sich bei der Projektionsanlage 12 sowohl um analoge Durchlichtprojektoren als auch um Digital-Projektoren handeln, die beispielsweise die Bilder 14, 16 durch Überlagerung farblich unterschiedlicher Laser konstruieren. Die konkrete Erzeugung der Bilder 14, 16 ist für das Ergebnis, nämlich die deckend überlagerte Darstellung eines Objektes unter zwei unterschiedlichen Betrachtungswinkeln auf dem Projektionsschirm 18, weitgehend unerheblich.

Das auf den Schirm 18 projizierte Überlagerungsbild wird von einem Betrachter durch eine Betrachtungsvorrichtung 20 betrachtet. Die Betrachtungsvorrichtung 20 ist bei der gezeigten Ausführungsform als Brille ausgebildet, deren Brillengläser die Betrachtungsfenster 22, 24 der Betrachtungsvorrichtung 20 darstellen. Die Eigenschaften der Betrachtungsfenster 22, 24 müssen so auf die Projektionseigenschaften der Bilder 14, 16 abgestimmt sein, dass dasjenige Bild 14, welches das Objekt unter einem Betrachtungswinkel darstellt, welcher der Betrachtung mit dem linken Auge eines Betrachters entspricht, nur von dem linken Betrachtungsfenster 22 der Betrachtungsvorrichtung 20 passieren gelassen wird. Von dem rechten Betrachtungsfenster 24 muss es hingegen blockiert werden. Analoges gilt für das rechte Bild 16, welches lediglich das rechte Betrachtungsfenster passieren darf und von dem linken Betrachtungsfenster 22 abgeblockt werden muss. Diese Separation erfolgt im Rahmen der vorliegenden Erfindung durch spektrale Trennung. Insbesondere werden die Bilder 14, 16 mit unterschiedlichen, nicht überlappenden Projektionsspektren 26, 28 auf den Schirm 18 projiziert. Die Betrachtungsfenster 22, 24 sind als Spektralfilter ausgebildet, deren Filterspektren 30, 32 gem. den oben erläuterten Anforderungen auf die Projektionsspektren der Bilder 14, 16 abgestimmt sind.

Figur 2 zeigt eine beispielhafte Ausgestaltung der spektralen Verhältnisse eines Stereoprojektionssystems gemäß Figur 1. Das Diagramm ist als Extinktionsspektrum gestaltet, wobei die Extinktion in der logarithmischen Skalierung optischer Dichten (OD) dargestellt ist. Wie auch in Figur 1 sind die mit dem linken Auge des Betrachters assoziierten Komponenten punktiert dargestellt, während die mit dem rechten Auge assoziierten Komponenten in durchgezogenen Linien dargestellt sind. Bei der gezeigten Ausführungsform kann das rechte Bild 16 aus vier Laserlinien bei ca. 425, 510, 590 und 650 Nanometer Wellenlänge aufgebaut sein. Bei geeigneter Abstimmung der Intensitäten der einzelnen Linien lassen sich projizierte Punkte erzeigen, die von einem Betrachter als jede Farbe des sichtbaren Spektrums wahrgenommen werden können. Aus solchen Farbpunkten kann das rechte Bild 16 auf dem Schirm 18 aufgebaut werden. Analoges gilt für das linke Bild 14, welches bei der dargestellten Ausführungsform aus drei Laserlinien bei ca. 475, 560 und 620 Nanometer Wellenlänge aufgebaut sein kann. Alternativ zu der Komposition der Bilder 14, 16 aus verschiedenen Laserlinien können auch entsprechende Interferenz- oder Absorptionsfilter zusammen mit einer Weißlicht-Beleuchtung verwendet werden. Die Verteilung der Spitzen im Projektionsspektrum kann selbstverständlich deutlich von der in Figur 2 gezeigten Ausführungsform abweichen. Diese ist rein beispielhaft zu verstehen.

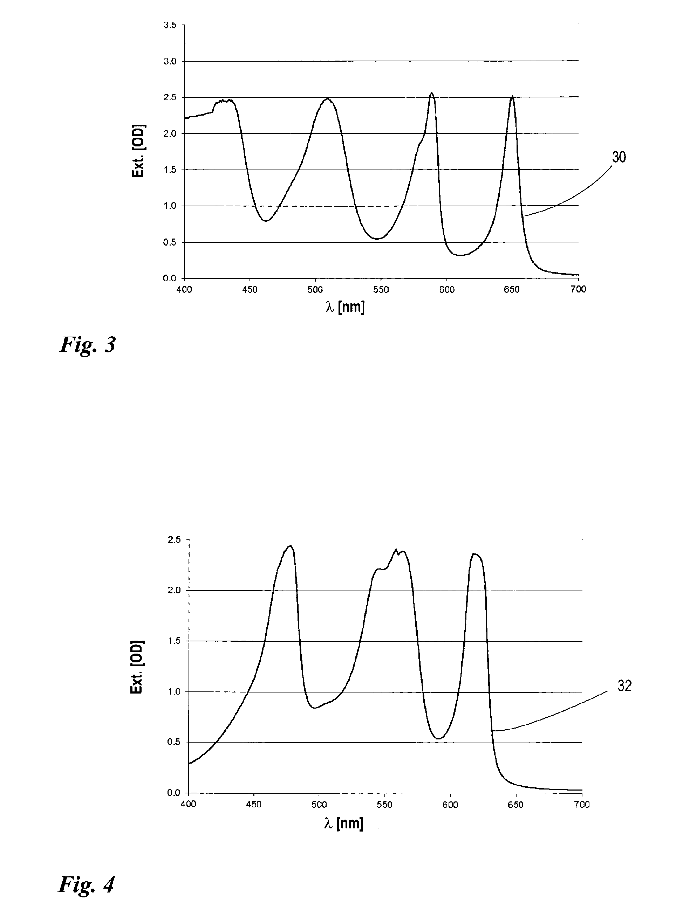

Die Filterspektren 30, 32 der Betrachtungsfenster 22, 24 sind auf die Projektionsspektren 26, 28 der Bilder 14, 16 abgestimmt. Insbesondere weist das linke Filterspektrum 30, d.h. das Filterspektrum des linken Betrachtungsfensters 22, dort seine Durchlassbereiche auf, wo das linke Projektionsspektrum 26 seine Spitzen aufweist, d.h. bei der gezeigten Ausführungsform dort, wo die Projektionslaserlinien des linken Projektionsspektrums 26 liegen. Seine Blockierungsbereiche, d.h. seine Bereiche maximaler Extinktion, weist das linke Filterspektrum 30 gerade dort auf, wo das rechte Projektionsspektrum 28 seine Spitzen, d.h. bei der gezeigten Ausführungsform seine Laserlinien hat. Auf diese Weise wird erreicht, dass lediglich das linke Bild 14 das linke Betrachtungsfenster 22 passieren und daher nur von dem linken Auge des Betrachters wahrgenommen werden kann. Analoges gilt für das rechte Filterspektrum 32, d.h. das Filterspektrum des rechten Betrachtungsfensters 24. Dessen Durchlassbereiche liegen dort, wo das rechte Projektionsspektrum 28 seine Spitzen, bei der gezeigten Ausführungsform seine Laserlinien hat. Seine Blockierungsbereiche weist das rechte Filterspektrum 32 dort auf, wo das linke Projektionsspektrum 26 seine Spitzen, bei der gezeigten Ausführungsform seine Laserlinien hat. Auf diese Weise wird sichergestellt, dass das rechte Bild 16 lediglich das rechte Betrachtungsfenster 24 passieren und lediglich vom rechten Auge des Betrachters wahrgenommen werden kann. Die Filterspektren 30, 32 des linken und rechten Betrachtungsfensters 22, 24 sind nochmals separat in den Figuren 3 bzw. 4 dargestellt.

Technisch können diese Filterspektren durch schichtweise Auftragung der folgenden Farbstoffe (intern. Bezeichnug), von denen insbesondere die drei ersten in supramolekularer Konfiguration als J-Aggregate vorliegen, erzeugt werden:
3-Ethyl-2-[3-(3-ethyl-3H-benzothiazol-2-ylidene)-propenyl]-benzothiazolium iodide,
2-[5-[1,1-Dimethyl-3-(4-sulfobutyl)-1,3-dihydrobenzo[e]indol-2-ylidene]-penta-1,3-dienyl]-1,1-dimethyl-3-(4-sulfobutyl)-1H-benzo[e]indolium hydroxide,
5,6-Dichloro-2-[[5,6-dichloro-1-ethyl-3-(4-sulfobutyl)-benzimidazol-2-ylidene]-propenyl]-1-ethyl-3-(4-sulfobutyl)-benzimidazolium hydroxide gemischt mit 3-Ethyl-2-[3-(3-ethyl-3H-benzothiazol-2-ylidene)-propenyl]-benzothiazolium iodide,
5,5-Dichlor-3,3'-Disulfobuthyl-Benzthiazoltrimethincyanin-Triethylamonium,
5,5-Dichlor-3,3'-Disulfobuthyl-3-Ethyl-Benzthiazoltrimethincyanin-Triethylamonium,
3,3'-Disulfobuthyl-3- Ethyl-Naphtthiazoltrimethincyanin-Triethylamonium.

Zur Herstellung der Schichten werden die gelösten Farbstoffe, deren spektrale Eigenschaften durch Wahl des Lösungsmittels und/oder Zugabe von Salzen und/oder Tensiden exakt einstellbar sind, einzelschichtweise auf einen Träger, insbesondere eine in sichtbarem Bereich transparente, flexible Folie aufgetragen. Die Absorptionsstärke wird dabei durch die Schichtdicke und die Farbstoffkonzentration auf das gewünschte Maß eingestellt. Bei der Aufbringung der Farbstoffschicht ist besonders auf hohe Homogenität, d.h. auf Variationen der optischen Extinktion von weniger als 1%, zu achten. Anschließend kann eine Folgeschicht aufgetragen werden, deren Basis ein weiterer Farbstoff ist. Dabei sollte eine Durchmischung der Schichten vermieden werden. Dies kann beispielsweise dadurch erfolgen, dass die Folgeschicht erst aufgetragen wird, wenn Vorgängerschicht abgetrocknet ist. Allerdings ist es auch möglich, noch feuchte Schichten übereinander aufzutragen. Um eine Durchmischung zu vermeiden, können die einzelnen Schichten beispielsweise elektrisch geladen werden oder es können geeignete Trennschichten, z.B. aus einer transparenten Folie, zwischen den Farbstoffschichten aufgebracht werden. Auf diese Weise wird schichtweise ein Filtersystem mit den gewünschten Eigenschaften ausgebildet.

Die solchermaßen erzeugten Betrachtungsfenster werden beispielsweise als "Gläser" einer Betrachtungsbrille auf ein einfaches Kunststoff- oder Karton-Brillengestell aufgeklebt und die gesamte Betrachtungsvorrichtung dann lichtdicht verpackt. Die lichtdichte Verpackung ist insofern wesentlich, als die J-Aggregat-Konfiguration der verwendeten Cyanin-Farbstoffe stark lichtempfindlich ist. Intensiver Lichteinfall führt zur Zerstörung der J-Aggregat-Konfiguration und somit zu einer Verflachung, Verbreiterung und Verschiebung der Extinktionsspitzen im Filterspektrum. Die ursprünglich optimale Abstimmung der Filtereigenschaften der Betrachtungsfenster aufeinander sowie auf die Projektionsspektren lässt somit nach; der räumliche Eindruck für den Betrachter nimmt ab. Bei der geringen Lichtbelastung während einer typischen Kinovorstellung sind die J-Aggregate stabil genug, um eine gesamte Vorstellung lang einen guten 3D-Eindruck für den Betrachter zu gewährleisten. Danach, spätestens jedoch wenn die Brille dem Tageslicht ausgesetzt wird, ist sie kaum mehr zu gebrauchen und muss für eine weitere Vorstellung durch eine neue Brille ersetzt werden, was für den Kinobetreiber eine willkommene Einnahmequelle ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere kann die Anzahl und Lage der Extinktionsspitzen im Filterspektrum sowie die Anzahl und Lage der Spitzen im Projektionsspektrum deutlich von den hier dargestellten Beispielen abweichen. Je nach konkretem Anwendungsfall wird der Fachmann eine solche Abstimmung vornehmen, sodass eine saubere Trennung der rechten und linken Spektren gegeben ist und dass sich für beide Augen des Betrachters jeweils ein gleicher Farbeindruck mit gleicher Helligkeit ergibt. Die nahezu unüberschaubare Vielfalt an Farbstoffen, insbesondere Cyanin-Farbstoffen erlaubt es dem Fachmann für jede spezielle Konstellation geeignete Farbstoffe in J-Aggregat-Konstellation zu finden.

### Bezugszeichenliste

- 10: Stereoprojektionssystem
- 12: Stereoprojektionsanlage
- 14: linkes Bild
- 16: rechtes Bild
- 18: Projektionsschirm
- 20: Betrachtungsvorrichtung
- 22: linkes Betrachtungsfenster
- 24: rechtes Betrachtungsfenster
- 26: linkes Projektionsspektrum
- 28: rechtes Projektionsspektrum
- 30: linkes Filterspektrum
- 32: rechtes Filterspektrum

## Patentansprüche

1. Betrachtungsvorrichtung für ein Stereoprojektionssystem (10), umfassend ein erstes und ein zweites jeweils mit einem optisch filternden Filterschichtsystem versehenes Betrachtungsfenster (22, 24),
wobei jedes Betrachtungsfenster (22, 24) im sichtbaren Spektralbereich ein Filterspektrum (30, 32) mit mehreren durch Blockierungsbereiche voneinander getrennten Durchlassbereichen aufweist
und wobei jeder Durchlassbereich des Filterspektrums (30) des ersten Betrachtungsfensters (22) von einem zugeordneten Blockierungsbereich des Filterspektrums (32) des zweiten Betrachtungsfensters (24) überdeckt ist, wobei jedes Filterschichtsystem als Absorptionsfilterschichtsystem mit einer Mehrzahl in unterschiedlichen Spektralbereichen absorbierender Substanzen ausgebildet ist,
**dadurch gekennzeichnet,**
**dass** wenigstens eine erste der absorbierenden Substanzen ein Cyanin-Farbstoff ist, der in supramolekularer Konfiguration eines J-Aggregats vorliegt, und wenigstens eine zweite der absorbierenden Substanzen ein Rhodamin- oder Squarain-Farbstoff ist.

2. Betrachtungsvorrichtung nach Anspruch 1,
**dadurch gekennzeichnet,**
**dass** jedes Filterschichtsystem aus einer Mehrzahl von Einzelfilterschichten besteht, wobei jede Einzelfilterschicht eine oder mehrere absorbierende Substanzen enthält, die gemeinsam genau einen der Blockierungsbereiche des Filterspektrums (30, 32) erzeugen.

3. Betrachtungsvorrichtung nach einem der vorangehenden Ansprüche,
**dadurch gekennzeichnet,**
**dass** jedes Filterschichtsystem auf einen im sichtbaren Spektralbereich transparenten Träger aufgerakelt ist.

4. Betrachtungsvorrichtung nach einem der Ansprüche 1 bis 2,
**dadurch gekennzeichnet,**
**dass** jedes Filterschichtsystem im Kaskadengussverfahren auf einen im sichtbaren Spektralbereich transparenten Träger aufgebracht ist.

5. Betrachtungsvorrichtung nach einem der Ansprüche 3 bis 4,
**dadurch gekennzeichnet,**
**dass** der Träger eine im sichtbaren Bereich transparente, flexible Folie ist.

6. Betrachtungsvorrichtung nach einem der vorangehenden Ansprüche.
**dadurch gekennzeichnet,**
**dass** der Transmissionsgrad jedes Betrachtungsfensters (22, 24) in jedem Blockierungsbereich seines Filterspektrums (30, 32) weniger als ein Prozent, 1 %, des Transmissionsgrade des zugeordneten Durchlassbereichs des Filterspektrums (32, 30) jeweils anderen Betrachtungsfensters (24, 22) beträgt.

7. Betrachtungsvorrichtung nach einem der vorangehenden Ansprüche.
**dadurch gekennzeichnet,**
**dass** der Transmissionsgrad jedes Betrachtungsfensters (22, 24) in jedem Blockierungsbereich seines Filterspektrums (30, 32) weniger als ein Prozent, 1 %, des Transmissionsgrades jedes unmittelbar benachbarten Durchlassbereichs des Filterspektrums (30, 32) desselben Betrachtungsfensters (22, 24) beträgt.

8. Stereo-Projektionssystem, umfassend
- eine Projektionsanlage (12), die ein erstes und ein zweites Bild (14, 16), welche ein Objekt unter unterschiedlichen Sichtwinkeln darstellen, im sichtbaren Spektralbereich mit orthogonalen Projektionsspektren (26, 28) auf einer Projektionswand (18) aufeinander projiziert, und
- eine Betrachtungsvorrichtung (20) nach Anspruch 1, wobei die, im sichtbaren Spektralbereich orthogonale Filterspektren (30, 32) der ersten und zweiten Betrachtungsfenster (22, 24) so auf die Projektionsspektren (26, 28) der Projektionsanlage (12) abgestimmt sind, dass das erste Betrachtungsfenster (24) für das erste Projektionsspektrum (28) und das zweite Betrachtungsfenster (24) für das zweite Projektionsspektrum (28) transparent ist.

9. Verwendung von Cyanin-Farbstoffen in supramolekularer J-Aggregat-Konfiguration als absorbierende Substanzen in optisch filternden Filterschichtsystemen von Betrachtungsfenstern (22, 24) von Betrachtungsvorrichtungen (20) nach einem der Ansprüche 1 bis 7, insbesondere in einem Stereo-Projektionssystem nach Anspruch 8.

## Claims

1. A viewing device for a stereo projection system (10), which viewing device comprises a first and a second viewing window (22, 24) each provided with an optically filtering filter layer system,
wherein each viewing window (22, 24) includes, in the visible spectral range, a filter spectrum (30, 32) including a plurality of pass bands separated from one another by blocking ranges,
and wherein each pass band of the filter spectrum (30) of the first viewing window (22) is covered by an associated blocking range of the filter spectrum (32) of the second viewing window (24),
wherein each filter layer system is formed as an absorption filter layer system including a plurality of substances absorbing in different spectral ranges,
**characterised in that**
at least a first of the absorbing substances is a cyanine dye that is present in a supramolecular configuration of a J-aggregate, and at least a second of the absorbing substances is a rhodamine dye or a squaraine dye.

2. The viewing device according to claim 1,
**characterised in that**
each filter layer system is comprised of a plurality of single filter layers, wherein each single filter layer contains one or more absorbing substances that together generate exactly one of the blocking ranges of the filter spectrum (30, 32).

3. The viewing device according to one of the preceding claims,
**characterised in that**
each filter layer system is blade-coated onto a support that is transparent in the visible spectral range.

4. The viewing device according to one of claims 1 to 2,
**characterised in that**
each filter layer system is applied in the cascade casting process onto a support that is transparent in the visible spectral range.

5. The viewing device according to one of claims 3 to 4,
**characterised in that**
the support is a flexible film that is transparent in the visible range.

6. The viewing device according one of the preceding claims,
**characterised in that**
the transmission degree of each of the viewing windows (22, 24) in each blocking range of its filter spectrum (30, 32) is less than one per cent, 1%, of the transmission degree of the associated pass band of the filter spectrum (32, 30) of each of the other viewing windows (24, 22).

7. The viewing device according to one of the preceding claims,
**characterised in that**
the transmission degree of each of the viewing windows (22, 24) in each blocking range of its filter spectrum (30, 32) is less than one per cent, 1%, of the transmission degree of each directly adjacent pass band of the filter spectrum (30, 32) of the same viewing window (22, 24).

8. A stereo projection system, comprising
- a projection system (12) that projects a first and a second image (14, 16) over each other onto a projection screen (18), which images present an object from different viewing angles, in the visible spectral range using orthogonal projection spectra (26, 28), and
- a viewing device (20) according to claim 1, wherein the
orthogonal filter spectra (30, 32), in the visible spectral range, of the first and second viewing windows (22, 24) are matched to the projection spectra (26, 28) of the projection system (12) such that the first viewing window (24) is transparent for the first projection spectrum (28) and the second viewing window (24) is transparent for the second projection spectrum (28).

9. The use of cyanine dyes in a supramolecular J-aggregate configuration as absorbing substances in optically filtering filter layer systems of viewing windows (22, 24) of viewing devices (20) according to one of claims 1 to 7, in particular in a stereo projection system (10) according to claim 8.

## Revendications

1. Dispositif d'observation destiné à un système de projection en stéréo (10), comprenant une première et une deuxième fenêtre d'observation (22, 24) pourvues chacune d'un système de couches filtrantes ayant un effet de filtre optique, chaque fenêtre d'observation (22, 24) présentant, dans le domaine spectral visible, un spectre de filtrage (30, 32) comportant plusieurs domaines de passage séparés les uns des autres par des domaines de blocage,
et chaque domaine de passage du spectre de filtrage (30) de la première fenêtre d'observation (22) étant chevauché par un domaine de blocage associé appartenant au spectre de filtrage (32) de la deuxième fenêtre d'observation (24), chaque système de couches filtrantes étant réalisé sous la forme d'un système à couches filtrantes absorbantes comportant une pluralité de substances dont l'absorption se situe dans différents domaines spectraux,
**caractérisé en ce que**
au moins une première des substances absorbantes est un colorant cyanine offrant une configuration supramoléculaire d'un agrégat de type J, et au moins une deuxième des substances absorbantes est un colorant rhodamine ou squaraïne.

2. Dispositif d'observation selon la revendication 1, **caractérisé en ce que** chaque système de couches filtrantes se compose d'une pluralité de couches filtrantes individuelles, chaque couche filtrante individuelle contenant une ou plusieurs substances absorbantes qui créent, ensemble, exactement un des domaines de blocage du spectre de filtrage (30, 32).

3. Dispositif d'observation selon l'une quelconque des revendications précédentes, **caractérisé en ce que** chaque système de couches filtrantes est appliqué à la lame sur un support transparent dans le domaine spectral visible.

4. Dispositif d'observation selon l'une des revendications 1 et 2, **caractérisé en ce que** chaque système de couches filtrantes est appliqué selon un processus de moulage en cascade sur un support transparent dans le domaine spectral visible.

5. Dispositif d'observation selon l'une des revendications 3 et 4, **caractérisé en ce que** le support consiste en une feuille souple transparente dans le domaine visible.

6. Dispositif d'observation selon l'une quelconque des revendications précédentes, **caractérisé en ce que** le degré de transmission de chaque fenêtre d'observation (22, 24), dans chaque domaine de blocage de son spectre de filtrage (30, 32), est inférieur à un pour cent, 1 %, du degré de transmission du domaine de passage associé du spectre de filtrage (32, 30) de chacune des autres fenêtres d'observation (24, 22).

7. Dispositif d'observation selon l'une quelconque des revendications précédentes, **caractérisé en ce que** le degré de transmission de chaque fenêtre d'observation (22, 24) dans chaque domaine de blocage de son spectre de filtrage (30, 32) est inférieur à un pour cent, 1 %, du degré de transmission de chaque domaine de passage du spectre de filtrage (30, 32) immédiatement adjacent de cette même fenêtre d'observation (22, 24).

8. Système de projection en stéréo, comprenant
- un dispositif de projection (12) qui projette sur une surface de projection (18) une première et une deuxième image (14, 16), représentant un objet sous divers angles de vue, dans le domaine spectral visible avec des spectres de projection (26, 28) orthogonaux, et
- un dispositif d'observation (20) selon la revendication 1, dans lequel les spectres de filtrage (30, 32) orthogonaux dans le domaine spectral visible des première et deuxième fenêtres d'observation (22, 24) sont en coïncidence avec les spectres de projection (26, 28) du dispositif de projection (12) de telle manière que la première fenêtre d'observation (24) pour le premier spectre de projection (28) est transparente et que la deuxième fenêtre d'observation (24) pour le deuxième spectre de projection (28) est transparente.

9. Utilisation de colorants cyanine dans une configuration supramoléculaire d'un agrégat de type J en tant que substances absorbantes dans des systèmes de couches filtrantes ayant un effet de filtre optique de fenêtres d'observation (22, 24) de dispositifs d'observation (20) selon l'une des revendications 1 à 7, notamment dans un système de projection en stéréo selon la revendication 8.
